Europäisches Patentamt

European Patent Office

Office européen des brevets

(11) Publication number: **0 476 220 A2**

## EUROPEAN PATENT APPLICATION

(21) Application number: **91104214.1**

(22) Date of filing: **19.03.91**

(51) Int. Cl.5: **H04N 1/46**

(30) Priority: **20.09.90 JP 250944/90**

(43) Date of publication of application:
**25.03.92 Bulletin 92/13**

(84) Designated Contracting States:
**DE GB**

(71) Applicant: **TOYO INK MFG. CO., LTD.**
**3-13, Kyobashi 2-chome**
**Chuo-ku Tokyo 104(JP)**

(72) Inventor: **Roh, Ishida**
**498-2, Makuharicho 5-chome**
**Chiba-City, Chiba-Prefecture 281(JP)**

(74) Representative: **Reichel, Wolfgang, Dipl.-Ing.**
**et al**
**Reichel und Reichel Parkstrasse 13**
**W-6000 Frankfurt am Main 1(DE)**

(54) **Color image information processing method.**

(57) The present invention relates to a method to binarize multivalued image with variable density.

As the method for binarization, ordered dither method and error diffusion method are known, whereas satisfactory reproduction of the image is not always achieved in case of color image.

According to this invention, input signal from the input pixel is binarized by threshold. The error between the input signal and the threshold is divided at the predetermined coefficient ratio and is accumulated and added to input signal from the subsequent input pixels, and the predetermined ratio is determined in proportion to the coefficient of the element of partical matrix fixedly corresponding to the input value matrix.

By performing this procedure on all pixels of the color image through scanning, binary value image of monochromatic image of the color image can be obtained. In case the monochromatic image to be superimposed is reproduced for each color, coefficient matrix is rotated at different angle for each color, and the above processing is performed.

F I G. 2

## BACKGROUND OF THE INVENTION

(Field of the Invention)

The present invention relates to a method to binarize a multivalued halftone image, and in particular to a method for binarization when digital multivalued color halftone image as read by scanner is reproduced by a color output device, which can output binary values.

(Technical Background)

In the field of image processing, ordered dither method or error diffusion method are generally known as the technique to binarize multivalued color image for tone reproduction.

Ordered dither method is a binarization technique, by which one pixel of input signal as read from an original of multivalued image corresponds to one pixel of the binarized image and the input signal is compared with the threshold table having periodicity fixedly corresponding to the position of input pixel to determine whether "to output" or "not to output".

The error diffusion method is a binarization technique, by which the error in binarizing one pixel of multivalued image is dispersed and added to the surrounding input pixels according the size of the coefficient of the relatively fixed coefficient matrix at the site where error occurred.

On the other hand, a method is known in the field of printing, by which color film is used as input medium and is separated into colors, periodic dots are prepared on black-and-white films by optical method using contact screen, printing blocks is prepared using these films, and color image is reproduced as dot image. In case of dot image, the size of dot represents the density of the image. Further, a method is known, by which the contact screen is rotated at different angle for each color, and moiré and color difference due to the registering miss on each color is reduced.

Also, another method has been developed to prepare dots electronically without using optical screen, and this has been furnished in the scanner for printing or plotter system in recent years.

(Evaluation of Background Technique)

However, the dither method is disadvantageous in that the pattern peculiar to the structure of threshold table is generated, that it is not perfect in the reproducibility of gradation, and that moire and color difference occur due to registering miss.

The error diffusion method has the problems in that peculiar snaky pattern appears on processed image, that there are problems to be solved in the image quality, and that it is still poor in gradation reproducibility.

The object of the present invention is to offer a color image information processing method, by which it is possible to provide perfect gradation reproducibility and to give the processed image with high image quality without threshold table.

(Disclosure of the Invention)

To attain the above objects, the first method for color image information processing to reproduce multivalued color halftone image information by an output device capable to output in binary values according to this invention is characterized in that, when the object value that is density value of input pixel of color image or the sum of the density value and the error value is binarized through comparison with the threshold, the difference between said object value and the threshold is divided into said error values in the size proportional to the coefficient in partial matrix of the coefficient matrix having periodicity in 1-dimensional or 2-dimensional direction consisting of the elements fixedly corresponding to the position of input pixel, and said error value is added to the object value of the other input pixel distributed and fixedly corresponding to the position of said input pixel.

The second color image information processing method according this invention is chracterized in that said coefficient matrix is rotated at different angle for each color in the first color image information processing method.

The third color image information porcessing method according thid invention is characterized in that said coefficient matrix rotated at different angle for each color is stored in the memory in the second color image information processing method.

The fourth color image information porcessing method to according this invention is characterized in that,

when the object value that is density value of input pixel of color image or the sum of the density value and the error value is binarized through comparison with the threshold, the difference between said object value and the threshold is divided into said error values in the size proportional to the coefficient in partial matrix of the coefficient matrix having periodicity in 1-dimensional or 2-dimensional direction consisting of the elements fixedly corresponding to the position of input pixel, and said error value is added to the object value of the other input pixel distributed and fixedly corresponding to the position of said input pixel, and the size of rows and/or colomns of said partial matrix is varied corresponding to the size of said error value.

The fifth color image information porcessing method to reproduce multivalued color image information by an output device capable to output in binary values according this invention is characterized in that,

when the object value that is density value of input pixel of color image or the sum of the density value and product of coefficeint, which is element of second coefficient matrix calcurated from first coefficient matrix having periodicity in 1-dimensional or 2-dimensional direction consisting of the elements fixedly corresponding to the position of input pixel, and error value which is element of error value matrix fixedly corresponding to the position of the input pixel is binarized through comparison with the threshold, the difference between said object value and the threshold is stored as an element of error value matirx corresponding to the position of input pexel.

The sixth color image information porcessing method according this invention is characterized in that said-first coefficient matrix is rotated at different angle for each color in the fifth color image information processing method.

The seventh color image information porcessing method according this invention is characterized in that said coefficient matrix rotated at different angle for each color is stored in the memory in the fifth color image information processing method.

(Effect of the Invention)

First, coefficient matrix is prepared. Each of the elements of coefficient matrix fixedly corresponds to the position of input pixel of color image respectively. This coefficient matrix has the period with length of m in the direction of row and the period with length of n in the direction of column. It is assumed that there is partial matrix of p rows and q columns in this coefficient matrix. The size of m, p, n and q are variable corresponding to the size of the error value or constant.

The object value consists in input signal from input pixel as a factor is binarized by the threshold, and the error between the object value and the threshold is divided by the predetermined ratio and is accumulated in the object value of the subsequent input pixels. The predetermined ratio in this case is determined in proportion to the coefficient. The coeffecent is either coeffecent of the element of partial matrix of the coefficient matrix fixedly corresponding to the input pixel or coefficient of the element of another coeffecent matrix derived from said coefficient matrix.

When this procedure is performed by scanning on all pixels of color image, binary image of monochromatic image of the color image is obtained. In each color, coefficient matrix is rotated at different angle for each color, and the above processing is performed.

It is possible according to this invention to offer a method for color image information processing to obtain the processed image with high quality and high gradation reproducibility without using threshold table.

(Embodiments)

In the following, the features and other details of this invention will be described in connection of the drawings.

(Brief Description of the Drawings)

Fig. 1 is a diagram to show coefficient matrix; Fig. 2 is a diagram to explain the process of the image processing; Fig. 3 is a graphic representation of partial matrix in the coefficient matrix; Fig. 4 is a diagram of an example of matrix of object value; Fig. 5 shows another example of the coefficient matrix;

Fig. 6 shows partial matrix of coefficient matrix;

Fig. 7 is a diagram to show matrix of object value after error is added; Fig. 8 is a diagram to show the matrix of object value after error is added further; Fig. 9 is a diagram of the rotated coefficient matrix; Fig. 10 is a diagram to show an input value matrix for multivalued image;

3

EP 0 476 220 A2

Fig. 11 represents another example of the coefficient matrix; Fig. 12 is a diagram to show output image according to the processing method of this invention; Fig. 13 is a diagram to represent an error diffusion coefficient table;

Fig. 14 is a diagram to show output image according to the error diffusion method; Fig. 15 is an output diagram to represent another output image according to this invention; Fig. 16 is a table to show the rotating angles of coefficient matrix for each color; Fig. 17 is a perspective view of another example of the distribution of coefficient size of the element in coefficient matrix; and Fig. 18 is a perspective view of another example of the distribution of coefficient size of the element in coefficient matrix.

Fig. 19 is the coefficient matrix rotated in the rotating angle $\theta$ that $\tan \theta$ belongs to a rational number; Fig. 20 is a diagram of an example of matrix of object value; Fig. 21 shows another example of the coefficient matrix;

Fig. 22 shows partial matrix of coefficient matrix;

Fig. 23 is a diagram to show matrix of object value after error is added; Fig. 24 is a diagram to show another matrix of object value after error is added; Fig. 25 is a diagram to show output image according to the processing method of this invention; Fig. 26 is a diagram to show partial matrix which size is variable;

Fig. 27 is a diagram to show output image according to the processing method of this invention;

Fig. 28 is diagram of the diffusion matrix;

Fig. 29 is a diagram to show a ratio (%) of output dots of abinary image;

Fig. 30 is a diagram to show first coefficient matrix; Fig. 31 is a diagram to explain the process of the image processing; Fig. 32 is diagram to show the positional relation between first coefficient matrix, error matrix and input value matrix and show partial matrix of the first coefficient matrix; Fig. 33 is a diagram of an example of matrix of input value; Fig. 34 shows another example of the first coefficient matrix;

Fig. 35 shows partial matrix of first coefficient matrix;

Fig. 36 is a diagram to show error value matrix;

Fig. 37 is a diagram to show the matrix of changed value added ; Fig. 38 is a diagram of the rotated first coefficient matrix;

Fig. 39 represents another example of the first coefficient matrix; Fig. 40 is a diagram to show output image according to the processing method of this invention;

Fig. 41 is an output diagram to represent another output image according to this invention; Fig. 42 is a diagram of the second coefficient matrix;

and Fig. 43 is a diagram of the second coefficient matrix determind before binarization.

(Description of the Embodiments)

First, the first invention is described.

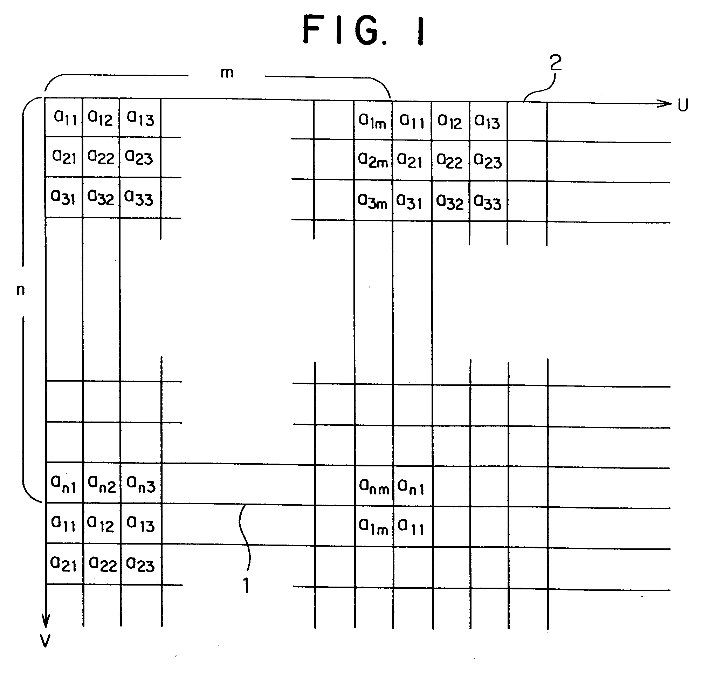

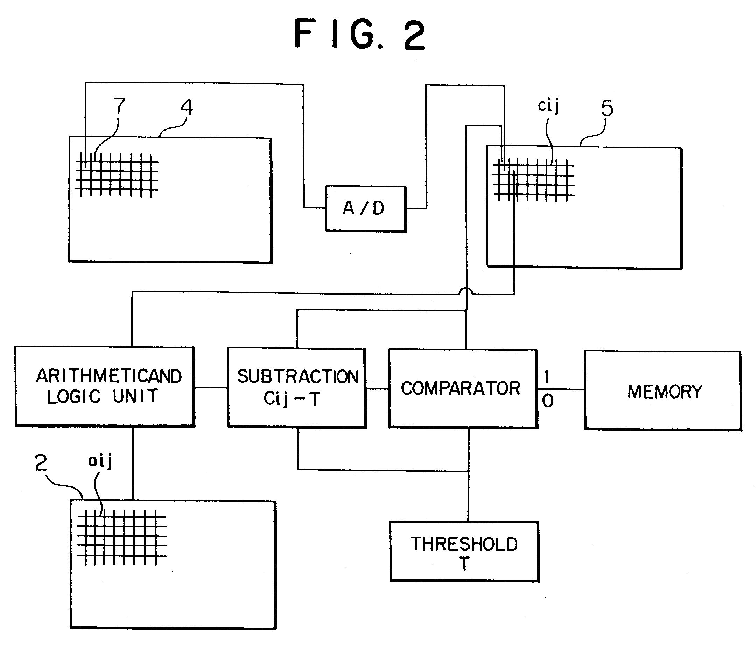

In Fig. 1, the numeral 2 represents coefficient matrix, and the coefficient matrix 2 has the length m in the direction of U-axis and the period with length n in the direction of V-axis. The coefficients $a_{11} \ldots a_{nm}$ in the number of n • m are included in one 2-dimensional period. The elements in the coefficient matrix 2 fixedly correspond to the position of input pixel 7 in multivalued color image 4 (Fig. 2).

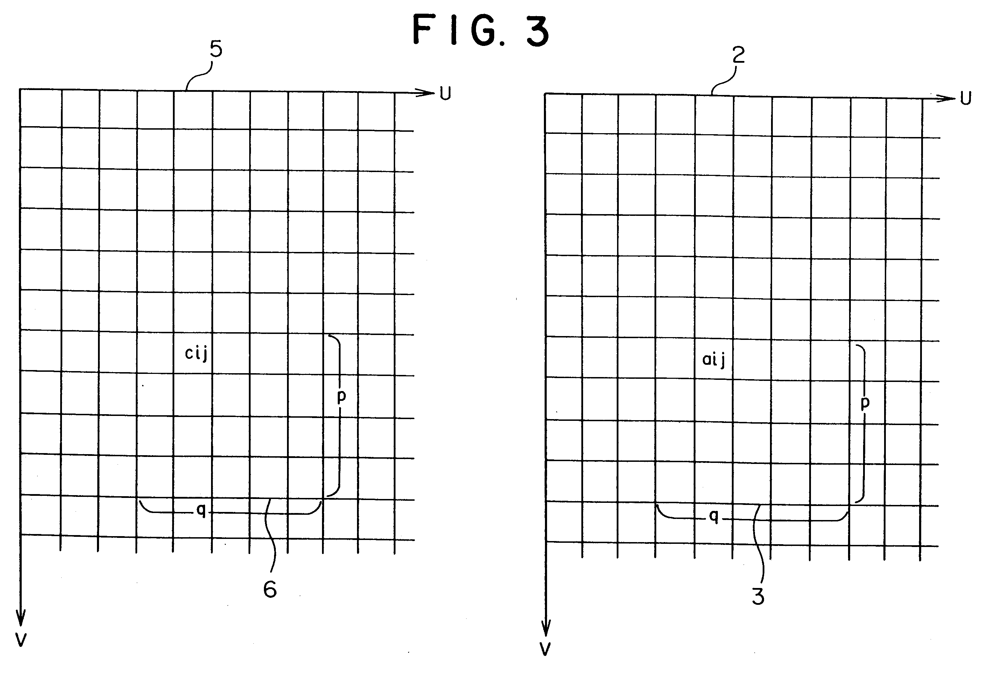

Namely, 2 is a coefficient matrix in Fig. 3, and 3 represents partial matrix of p rows and q columns of the coefficient matrix 2. The element $a_{ij}$ of the coefficient matrix 2 corresponds to the element $c_{ij}$ of the matrix 5 of the object value in the inputted multivalued color image 4. Because the coefficient matrix 2 has periodicity, the value of $a_{ij}$ is equal to the value of $a_{i \bmod m, j \bmod n}$. For example, if the periods m = 4 and n = 3, the value of $a_{3,2}$ is equal to the value of $a_{11,8}$ because $a_{11,8} = a_{11 \bmod 4, 8 \bmod 3} = a_{32}$. The element $c_{ij}$ of the matrix 5 of the object value fixedly corresponds to the position of the input pixel 7 of color image 4. Here, the object value given in the element $c_{ij}$ of the matrix 5 consist in input value as a factor is the input value of the input pixel 7 of color image 4, or the input value added with the error value accumratively.

If U is the main scanning direction of the processing and V is the secondary scanning direction, in case $c_{ij} \geqq T$, the binarized signal is turned "to output" when the value of $c_{ij}$ is binarized in comparison with the threshold T. Thus, the error of e = $c_{ij}$- T is generated. In case $c_{ij}$ < T, the binarized signal is turned "not to output", and the error e = $c_{ij}$ is generated.

This error e is dispersed and added to each element of partial matrix 6 of p rows and q columns of the object value matrix 5 of input pixel, corresponding to the range of partial matrix 3 of p rows and q columns of the coefficient matrix 2 including $a_{ij}$ in proportion to the coefficient $a_{wz}$ (except $a_{ik}$ with k ≤ j, of the values where w is changed by taking natural number from i to i + p - 1, and z is changed to each value of w by setting the natural number $\alpha$ which is lower than q and by taking natural number from j -$\alpha$ + 1 to j -$\alpha$ + q.)

By performing this processing to all input pixels by main scanning and the secondary scanning, the

4

image in binary values can be obtained. There is no specific relation between p, q and n, m.

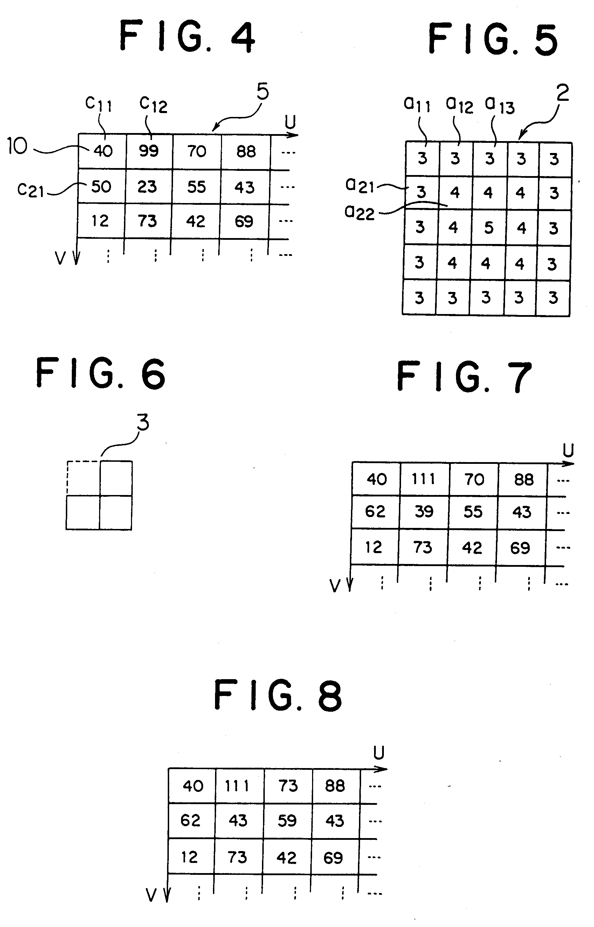

Next, the process to diffuse the error by the above processing is described in connection with the diagrams as an example. However, the claims of the present invention are not limited to the size of matrix and numerical values used in this description. In Fig. 4,5 represents the matrix of object value of inputted multivalued color image, and it is the matrix of the input value of the pixel of color image before the error is added and the numeral 10 denotes the site where error occurred. As shown in Fig. 5, it is supposed that the coefficient matrix 2 is a coefficient matrix of 5 rows and 5 columns, and the partial matrix 3 is the matrix with 2 rows and 2 columns as shown in Fig. 6. It is supposed that the range of the input pixel value is 0 - 100, and that the threshold is 100. Then, the value of $c_{11}$ of the object value matrix 5 is 40 and is smaller than the threshold. Thus, the binarized signal is turned to "not to output", the error is 40. To the matrix elements $c_{12}$, $c_{21}$ and $c_{22}$ of the input pixels corresponding to the error diffusion range of $a_{12}$, $a_{21}$ and $a_{22}$, $e_{12} = 12$ ( $= 40 \times 3/(3 + 3 + 4)$), $e_{21} = 12$ ( $= 40 \times 3/(3 + 3 + 4)$), and $e_{22} = 16$ ( $= 40 \times 4/(3 + 3 + 4)$) are added respectively. As the result, the matrix 5 of the object value of the input multivalued color image is as given in Fig. 7. The value of the input pixel $a_{12}$ to be processed subsequently is 111 and is bigger than the threshold. Thus, the binarized signal is turned to "to output", and 11 is the error. To the input elements $c_{13}$, $c_{22}$ and $c_{23}$ corresponding to the error diffusion ranges $a_{13}$, $a_{22}$, and $a_{23}$, the new error fragments $e_{13} = 3$ ($= 11 \times 3/(3 + 3 + 4)$) $e_{22} = 4$ ( $= 11 \times 4/(3 + 4 + 4)$), and $e_{23} = 4$ ( $= 11 \times 4/(3 + 4 + 4)$) are added respectively. As the result, the matrix of the object multivalued color image is as given in Fig. 8. The same processing is performed formed to all input pixels in the order of main scanning and the secondary scanning, and the processing for one frame is completed.

Next, description is given on the second invention.

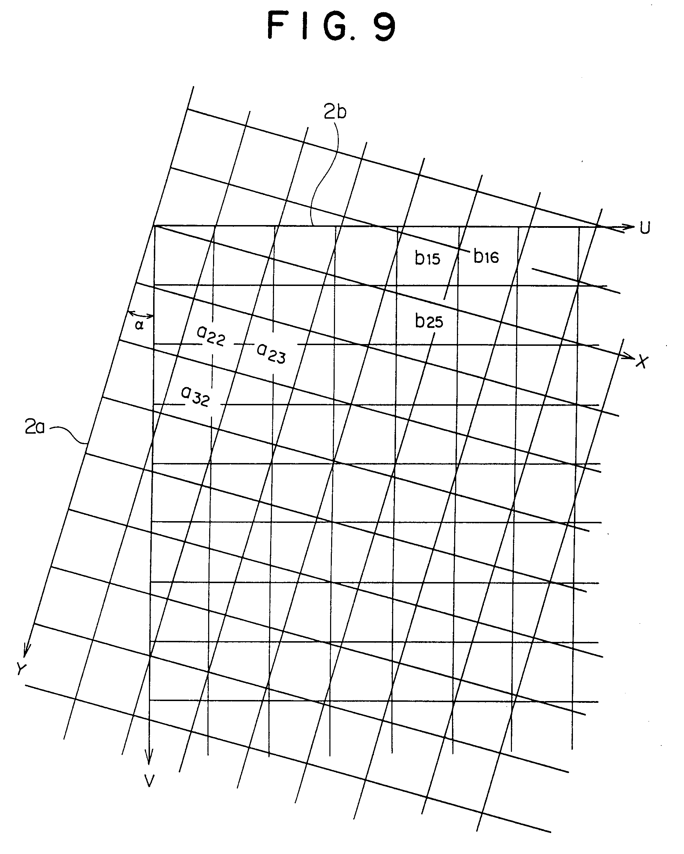

In Fig. 9, coefficient matrix 2a is obtained by rotating said coefficient matrix 2 by the angle A, and 2b represents the coefficient matrix having the element $b_{ij}$ corresponding to the element $c_{ij}$ of the matrix 5 of the object value of multivalued input pixel of the color image. The value of $b_{ij}$ is equal to the value of $a_{rl}$, and the following relationship exists:

$$r = [i \cdot \cos(A) - j \cdot \sin(A)] \bmod m.$$
$$l = [i \cdot \sin(A) + j \cdot \cos(A)] \bmod n.$$

Here, [ ] indicates rounding process.

When the same processing as in the description of the first invention is performed using the coefficient matrix 2b rotating at different angles for each color instead of the coefficient matrix 2, the image in binary values with less moiré and color difference due to the registering miss at output can be obtained.

[Experimental examples of the first invention]

In the following, the method according to this invention will be described in connection of experimental examples, whereas the present invention is not limited to the numeral values in the experimental examples.

[Experimental example 1 of the first invention]

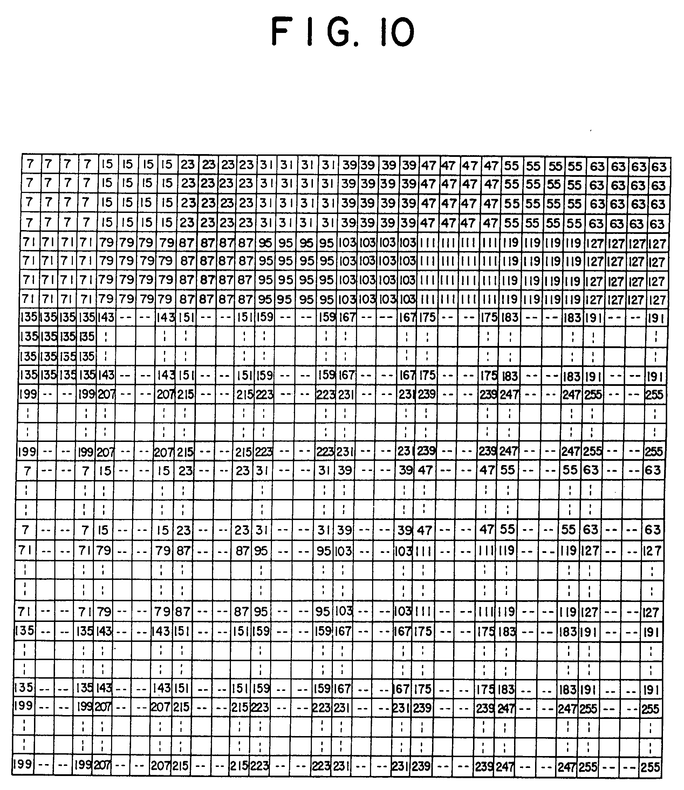

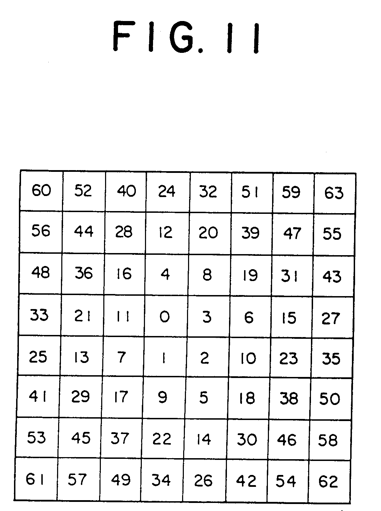

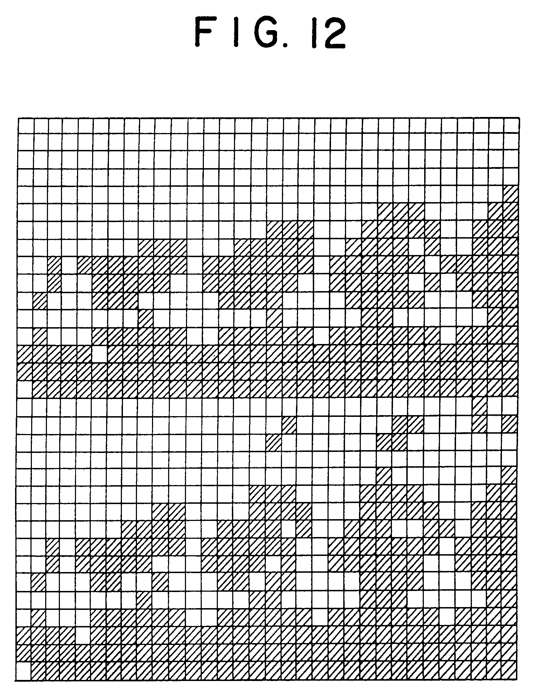

With Fig. 10 as the multivalued information of the input taking the values within the range of 0 - 255, with the threshold at 255, with Fig. 11 as coefficient matrix, with the size of partical matrix at 4 x 4 and rotating angle of 0°, the binary image of Fig. 12 was obtained.

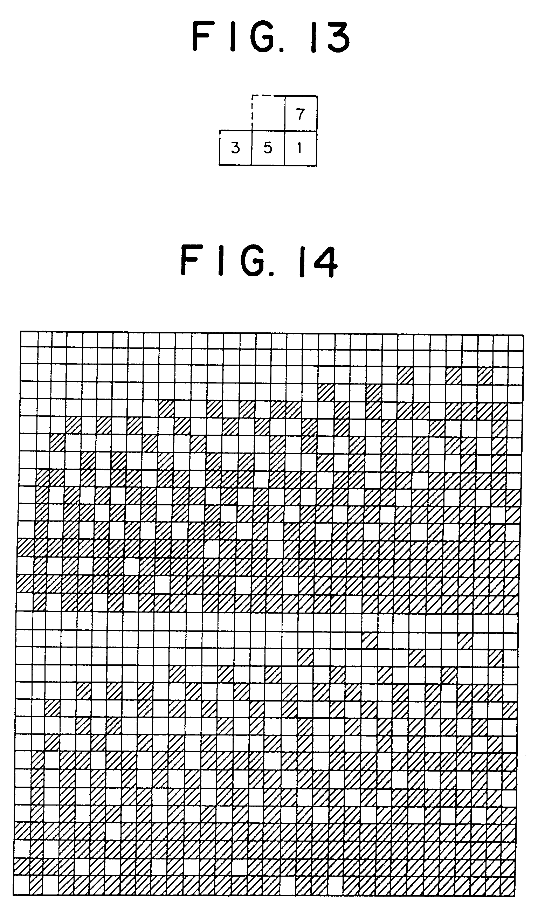

On the other hand, the image was reproduced through binarization according to the error diffusion method, using the same input data and the diffusion coefficient table of Fig. 13. The result is given in Fig. 14. As it is evident from the figure, the shape similar to dots can be obtained by the method of this invention.

(Experimental example 2 of the first invention)

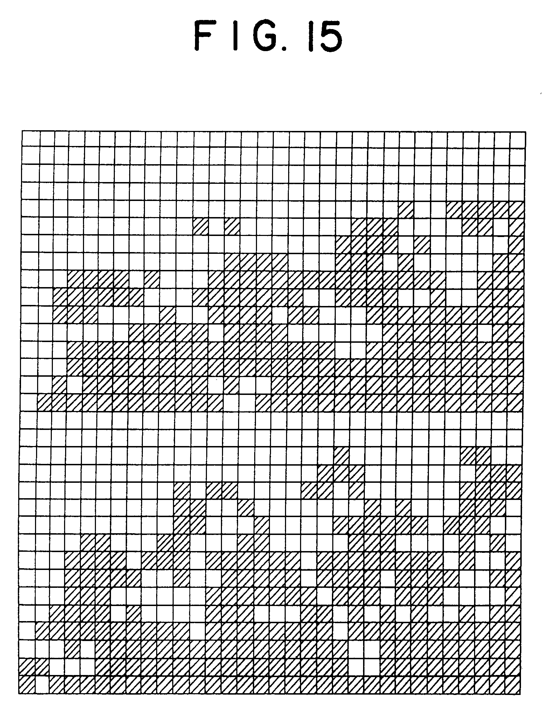

With Fig. 10 as the multivalued information of the input taking the values within the range of 0 - 255, with the threshold as 255, with Fig. 11 as coefficient matrix, with the size of partical matrix as 4 x 4 and rotating angle of 30°, the binary image of Fig. 15 was obtained. It is also evident in this figure that the shape similar to dots can be obtained.

(Experimental example 3 of the first invention)

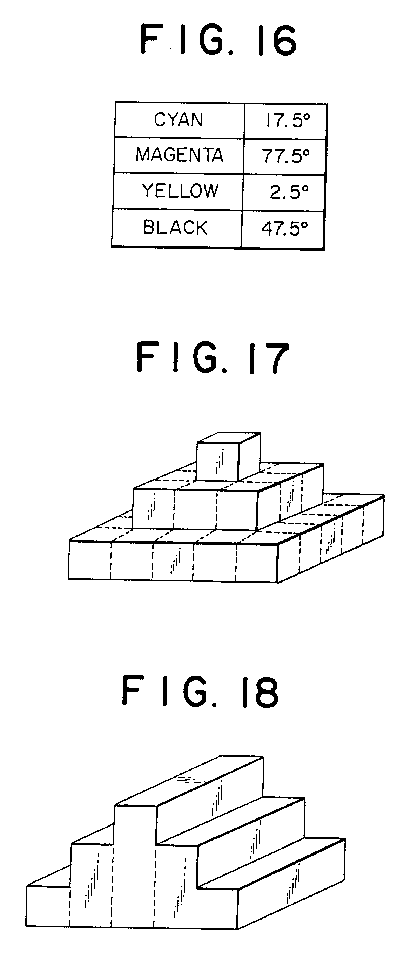

A transparent original was inputtd using a scanner for printer (Dainippon Screen Co., Ltd.,; SG-818), and binarization processing was performed by personal computer PC-9801 (NEC). The binary value image was outputted on black-and-white film by a laser plotter (Scitex), and color image was reproduced by a proof press (DuPont). The results were approximately the same as that of the conventional type printing. In this case, the coefficient matrix was the same as given in Fig. 11, and the size of partial matrix was 4 x 4. The coefficient matrix was rotated by the angle of Fig. 16 for each color.

As the result, a binary value image with less moire and color difference due to registering miss was obtained.

It is possible according to the present invention to obtain a method for color image information processing, which can provide high tone reproducibility and to give the processed image with excellent image quality without using threshold table.

When 2-dimensional coefficient matrix having a period n $\cdot$ m of this invention is turned to pyramid shape, where the values in central part is larger than those in the surrounding as given in Fig. 17, the binary value image like dots having the period similar to that of conventional type printing process using contact screen could be obtained. With the coefficient like mountain range as given in Fig. 18 the effect similar to that of the printing using single-lined screen was obtained, and both moiré and color difference were extremely decreased.

Next, the third invention is described.

It is capable to accelerate binarization memorising in a memory and using the coefficient matrix rotated in the same manner as the second invention previously in advance of binarization.

Particularly, the rotated coefficiet matrix that has $\sqrt{\delta^2 + \tau^2} \cdot$ f elements in each side and can be repeated using $\theta$ that $\tan \theta = \delta/\tau$ belongs to a rational number. This coefficient matrix can results reduction of a strage region in a memory. f is least common multiple number of elements number n and m of vertical horizontal axis of the coefficient matrix.

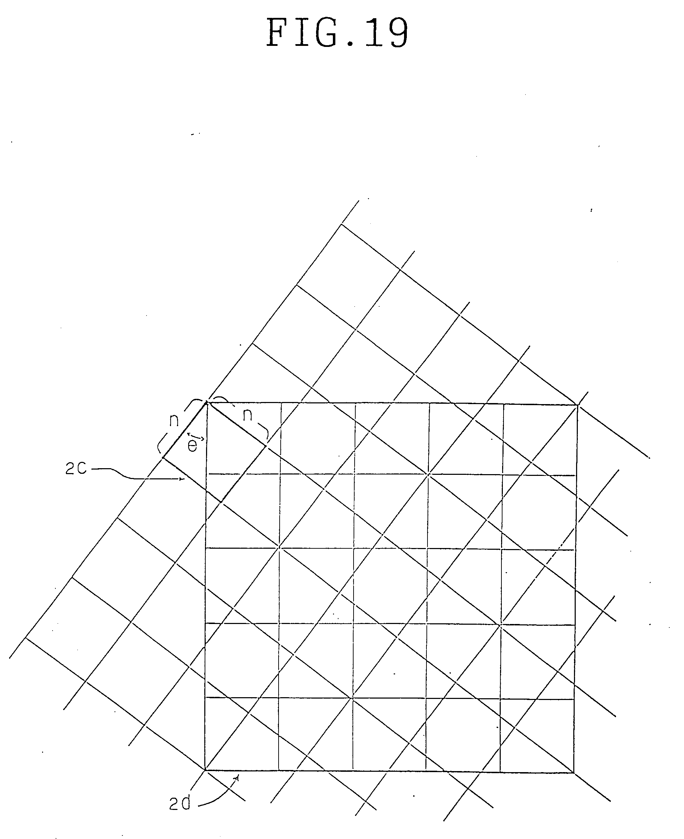

In Fig. 19, 2c desinates a unit of n x n coefficient matrix and 2d desinates the coefficient matrix rotated in angle $\theta$ that $\tan \theta = 3/4$ as an example.

The rotated coefficient has $\sqrt{3^2 + 4^2}$ n $= 5n$ elements in each side and can be repeated in vertical and horizontal direction.

Next, the fourth invention is described. In the same manner of the first invation, the error e is dispersed and added to each element of partial matrix 6 of p rows and q columns of the object value matrix 5 of input pixel, corresponding to the range of partial matrix 3 of p rows and q columns of the coefficient matrix 2 including $a_{ij}$ in proportion to the coefficient $a_{wz}$ (except $a_{ik}$ with $k \le j$, of the values where w is changed by taking natural number from i to i + p - 1, and z is changed to each value of w by setting the natural number $\alpha$ which is lower than q and by taking natural number from j $-\alpha$ + 1 to j $-\alpha$ + q). These p and q is varied corresponding to size of error value.

By performing this processing to all input pixels by main scanning and the sub scanning, the image in binary values can be obtained. There is no specific relation between p, q and n, m.

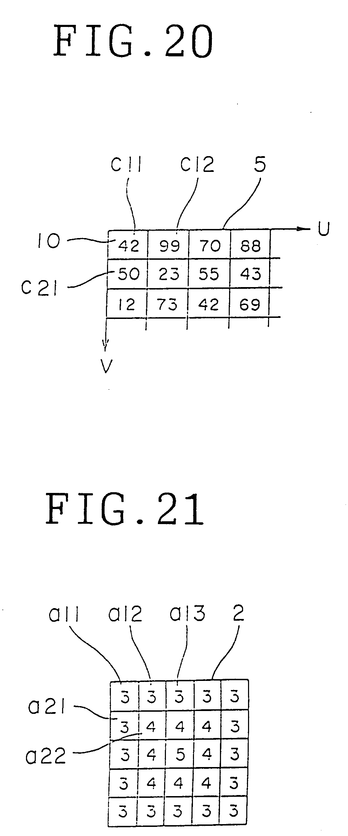

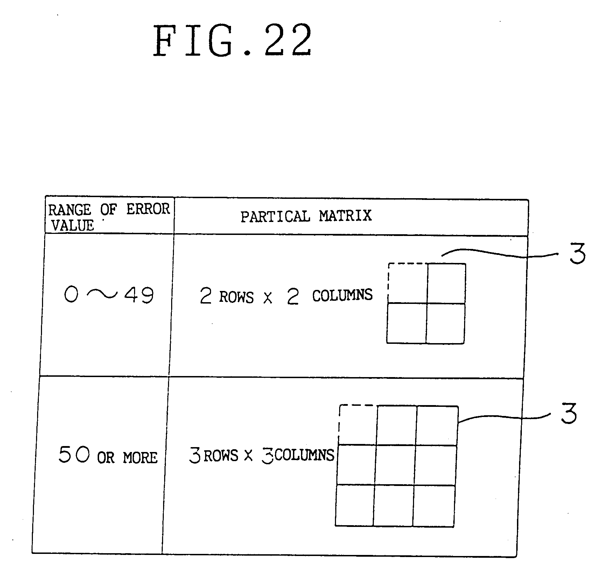

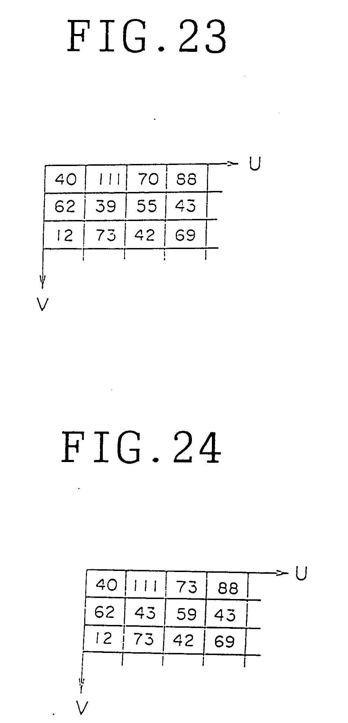

Next, the process to diffuse the error by the above processing is described in connection with the diagrams as an example. However, the claims of the present invention are not limited to the size of matrix and numerical values used in this description. In Fig. 20 ,5 represents the matrix of object value of inputted multivalued color image, and it is the matrix of the input value of the pixel of color image before the error is added and the numeral 10 denotes the site where error occurred. As shown in Fig. 21, it is supposed that the coefficient matrix 2 is a coefficient matrix of 5 rows and 5 columns, and the size of partial matrix 3 is determined corresponding to the range of error value as shown in Fig. 22. It is supposed that the range of the input pixel value is 0 - 100, and that the threshold is 100. Then, the value of $c_{11}$ of the object value matrix 5 is 42 and is smaller than the threshold. Thus, the binarized signal is turned to "not to output", the error is 42. Thus, size of partial matrix 2x2 is selected. To the matrix elements $c_{12}$, $c_{21}$ and $c_{22}$ of the input pixels corresponding to the error diffusion range of $a_{12}$, $a_{21}$ and $a_{22}$, $e_{12}$ = 12 ( = 42 x 3/(3 + 3 + 4)), $e_{21}$ = 12 ( = 42 x 3/(3 + 3 + 4)), and $e_{22}$ = 16 ( = 42 x 4/(3 + 3 + 4)) are added respectively. As the result, the matrix 5 of the object value of the input multivalued color image is as given in Fig. 23. The value of the input pixel $a_{12}$ to be processed subsequently is 111 and is bigger than the threshold. Thus, the binarized signal is turned to "to output", and 11 is the error. Thus, size of partial matrix 2x2 is selected. To the input elements $c_{13}$, $c_{22}$ and $c_{23}$ corresponding to the error diffusion ranges $a_{13}$, $a_{22}$, and $a_{23}$, the new error fragments $e_{13}$ = 3 (= 11 x 3/(3 + 3 + 4)) $e_{22}$ = 4 ( = 11 x 4/(3 + 4 + 4)), and $e_{23}$ = 4 ( = 11 x 4/(3 + 4 + 4)) are added respectively. As the result, the matrix of the input multivalued color image is as given in Fig. 24. The same processing is performed to all input pixels in the order of main scanning and the sub scanning, and the processing for one frame is completed.

In the case said above, though the first error value at the site where error occurred equal 42 and the sum of error fragment added at the site becomes 40 which is 2 smaller than 42 using rounding down processing, in case that a low number and column number of the partial matrix fixed in 3 $e_{12}$, $e_{22}$, $e_{33}$ become as follows, i.e.,

$e_{12} = e_{13} = e_{21} = e_{31} = ( 3 \times 42 ) / ( 3 + 3 = 3 + 4 + 4 + 3 + 4 + 5 ) = 4$

$e_{22} = e_{23} = e_{32} = ( 4 \times 42 ) / ( 3 + 3 + 3 + 4 + 4 + 3 + 4 + 5 ) = 5$

$e_{33} = (5 \times 42) / ( 3 + 3 + 3 + 4 + 4 + 3 + 4 + 5) = 7$

As the result, the sum of error fragment added at the site becomes 38 (that is sum of $4 \times 4 + 5 \times 3 + 7$) which is 2 smaller than sum of error fragment of the case in which the partial matrix is the matrix with 2 rows and 2 column. From this, it can be understand that it is good to change the size of partical matrix corresponding to the size of error value to obtain high gradation reproducility.

[Experimental example 1 of fourth invention]

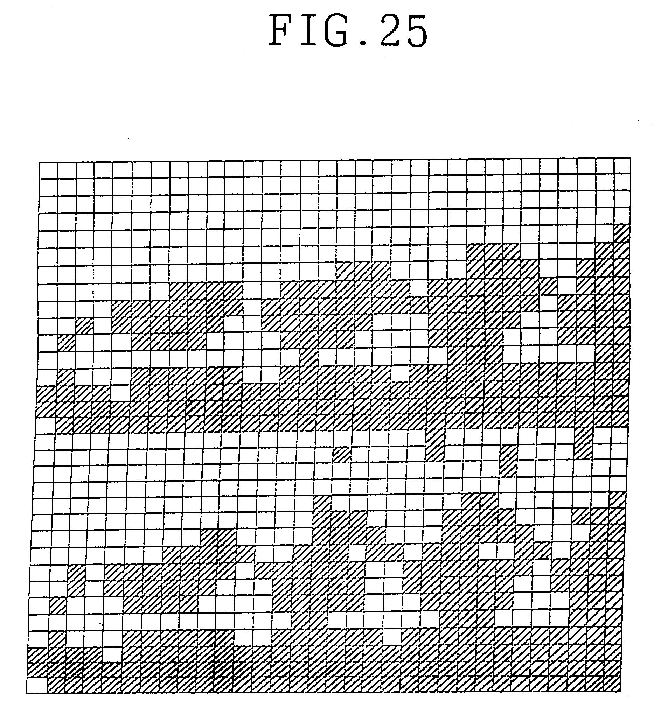

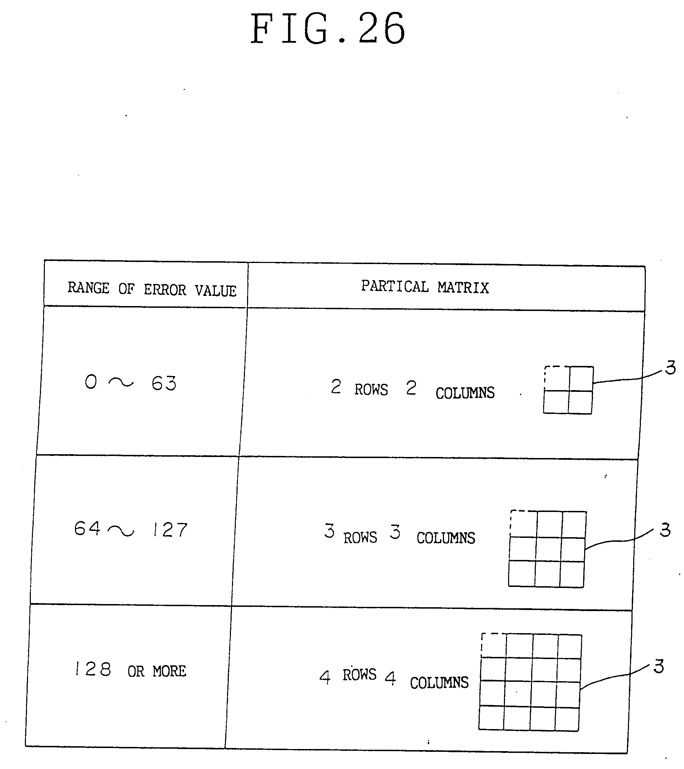

With Fig. 10 as the multivalued information of the input taking the values within the range of 0 - 255, with the threshold at 255, with Fig. 11 as coefficient matrix, with the size of partial matrix determined corresponding to the size of error value as shown in Fig. 26 and rotating angle of 0° , the binary image of Fig. 25 was obtained.

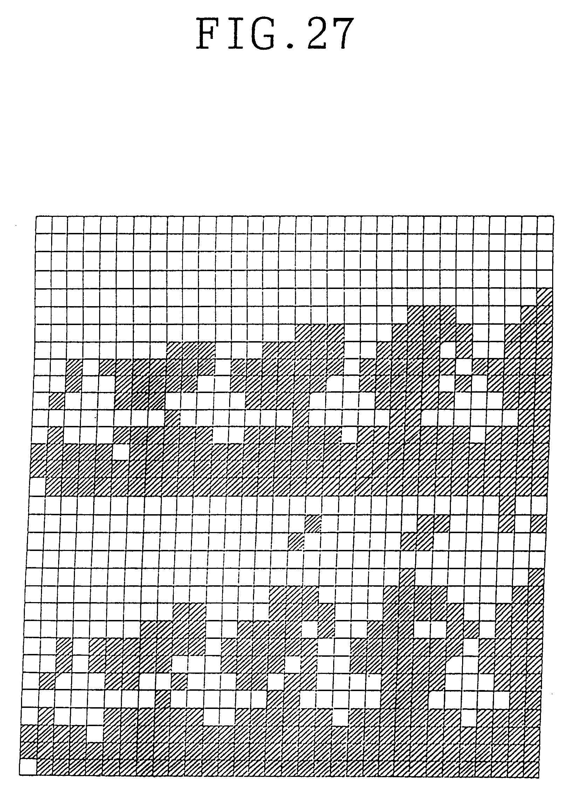

On the other hand, the binary image obtaind in same conditon as above using a partial matrix at 4 x 4 is as shown in Fig. 27.

[Experimental example 2 of fourth invention]

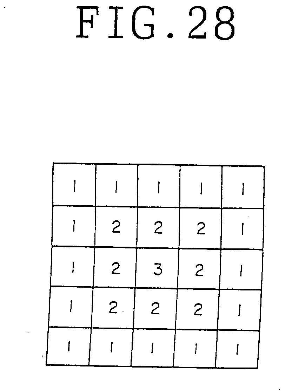

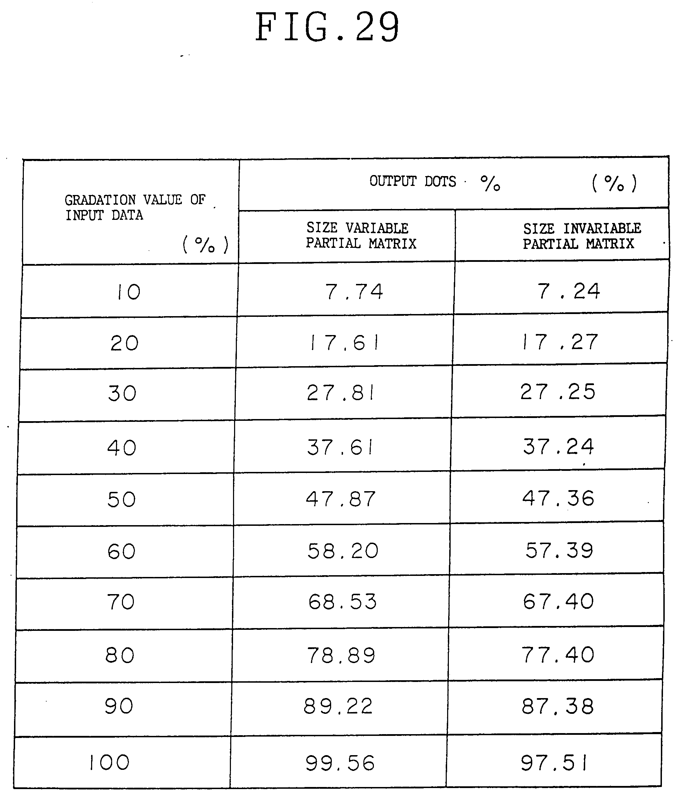

With the gradation which is changed at 10 % interval from 10 % to 100 % of the input, using the diffusion matrix of Fig. 28, the percentages (%) of the output dots of binary image in case that the partial matrix at fixed 4 X 4 is used and that the partial matrix that size is variable corresponding to the size of error value are compared as shown in Fig. 29. It is evident in this Fig. 29 that better gradation reproducibility is obtainable by using the partial matrix which size is variable corresponding to the size to error value.

Next, description is given on the fifth invention.

First, the first coefficient matrix is described.

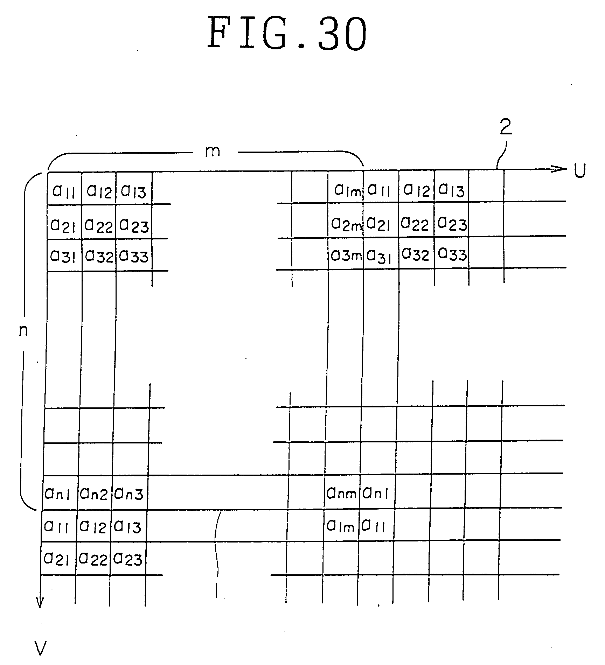

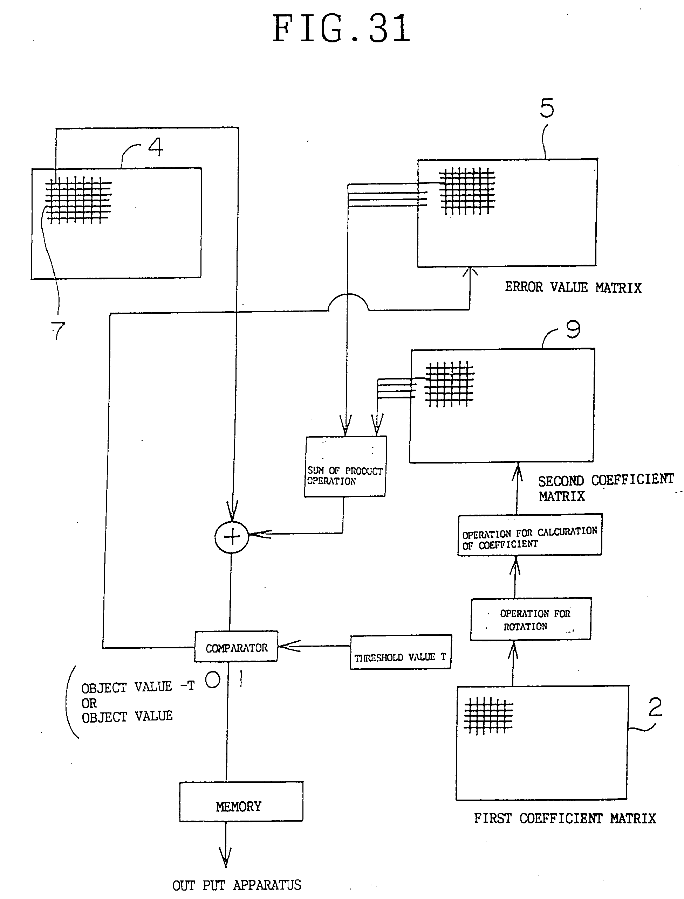

In Fig. 30, the numeral 2 represents the first coefficient matrix, and the first coefficient matrix 2 has the length m in the direction of U-axis and the period with length n in the direction of V-axis. The coefficients $a_{11}$.... $a_{nm}$ in the number of n • m are included in one 2-dimensional period. The elements in the first coefficient matrix 2 fixedly correspond to the position of input pixel 7 in multivalued color image 4 (Fig. 31).

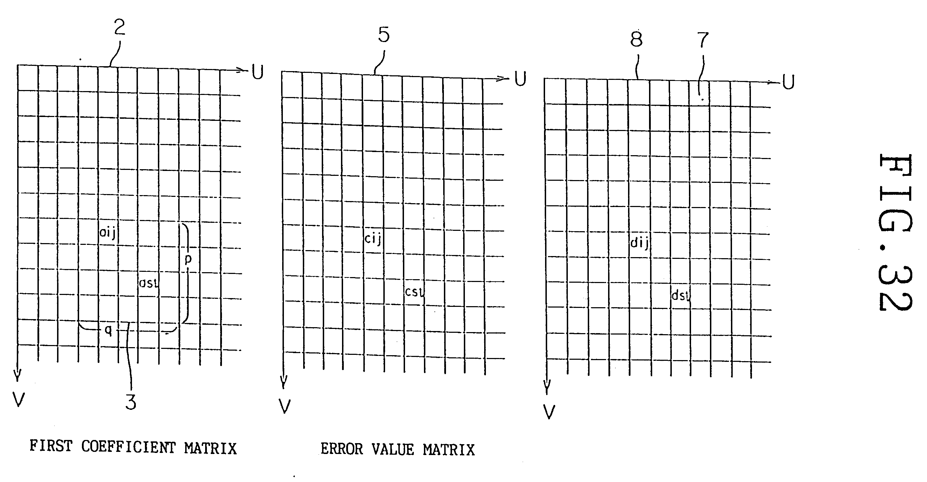

Namely, 2 is a first coefficient matrix in Fig. 32, and 3 represents partial matrix of p rows and q columns of the first coefficient matrix 2. The element $a_{ij}$ of the first coefficient matrix 2 corresponds to the element $d_{ij}$ of the matrix 8 of the input value in the inputted multivalued color image 4. Because the first coefficient matrix 2 has periodicity, the value of $a_{ij}$ is equal to the value of $a_{i \bmod m, j \bmod n}$. For example, if the periods m = 4 and n = 3, the value of $a_{3,2}$ is equal to the value of $a_{11,8}$ because $a_{11,8} = a_{11 \bmod 4, 8 \bmod 3} = a_{32}$.

Next, the error matrix is descirbed. The error value matrix 5 shown in Fig. 31 is a matrix that element is the error value consisted of the difference between the object value and the threshold value. The element $c_{ij}$ of the matrix 5 of the error value matrix fixedly corresponds to the position of the input pixel 7 of color image 4.

Next, to determine the second coefficient matrix 9 shown is Fig. 31,

if U is the main scanning direction of the processing and V is the sub scanning direction, the element $e_{i,j}$ of the second coefficient matrix is obtained using formula (2). To obtain the object value, value obtained using formula (3) is added to input value $d_{s,t}$ . To obtain the error value matrix 5 the object value is compared with some threshold value T.

Formula (2)

$$c_{i,\,j}$$

$$= \frac{a_{s,\,t}}{\displaystyle\sum_{z=j-\alpha+1}^{z=j-\alpha+q} \sum_{w=i}^{w=i+p-1} a_{w,\,z}} \qquad \begin{array}{l}(\,i \leqq s \leqq i+p-1 \,\, \\ \qquad\quad j-\alpha+1 \leqq t \leqq j-\alpha+q)\end{array}$$

$$(\text{ except } a_{i,\,k} \quad \text{with} \quad k \leqq j \,)$$

Formula (3)

$$\sum_{\zeta=j-\alpha+1}^{\zeta=j-\alpha+q} \sum_{\varepsilon=i}^{\varepsilon=i+p-1} c_{\varepsilon,\,\zeta} \cdot d_{\varepsilon,\,\zeta}$$

$$(\text{ except } \quad c_{\varepsilon,\,\zeta} \cdot d_{\varepsilon,\,\zeta} \quad \text{with} \quad \varepsilon=i+p-1, \,\, \zeta=j-\alpha+1 \,)$$

In case $d_{st} \geqq T$, the binarized signal is turned "to output" when the value of $c_{ij}$ is binarized in comparison with the threshold T. Thus, the error of e = $d_{st}$- T is generated. In case $d_{st}$ < T, the binarized signal is turned "not to output", and the error e = $d_{st}$ is generated. This error is stored as a value of element $c_{s,t}$ of the error matrix 5.

By performing this processing to all input pixels by main scanning and the sub scanning, the image in binary values can be obtained. There is no specific relation between p, q and n, m.

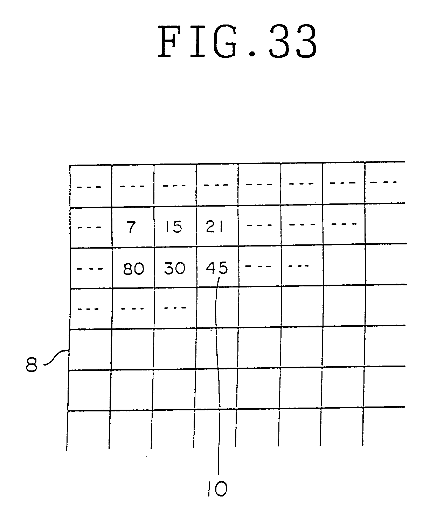

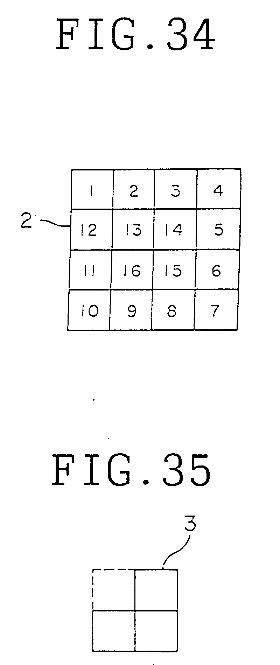

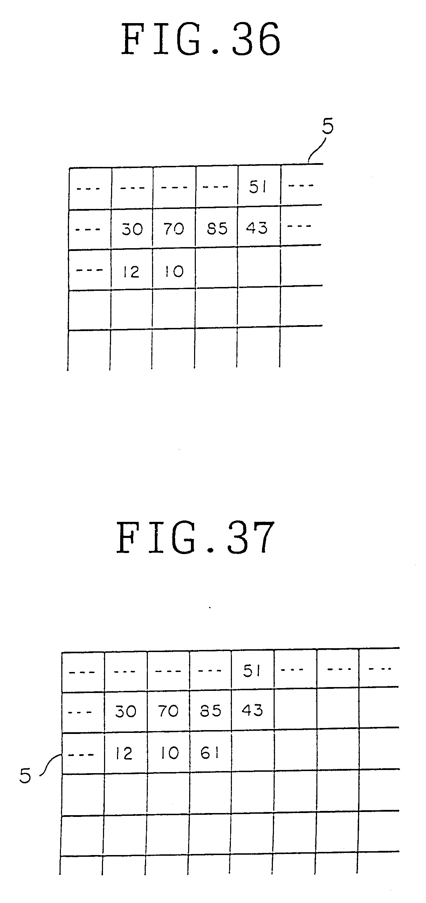

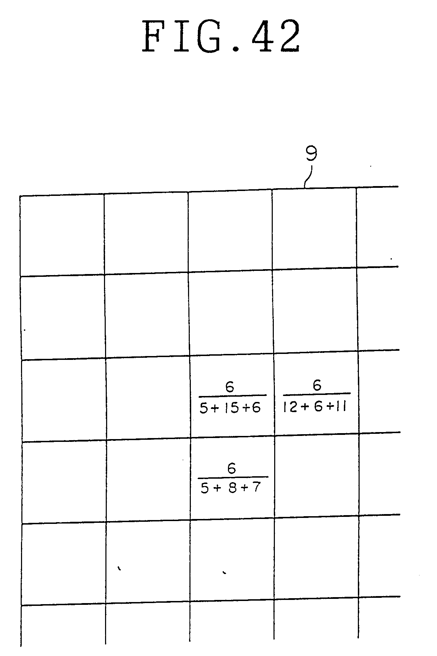

Next, the process to diffuse the error by the above processing is described in connection with the diagrams as an example. However, the claims of the present invention are not limited to the size of matrix and numerical values used in this description. In Fig. 33, 8 represents the matrix of input value of inputted multivalued color image, and the numeral 10 denotes the site where process is performed. As shown in Fig. 34, it is supposed that the first coefficient matrix 2 is a coefficient matrix of 4 rows and 4 columns, and the partial matrix 3 is the matrix with 2 rows and 2 columns as shown in Fig. 35. It is supposed that numeral 5 shown in Fig. 36 denotes the error value matrix. It is supposed that the range of the input pixel value is 0 - 100, and that the threshold is 100. The value of the object pixel value is 45 and the second coefficient matrix 9 shown Fig. 42 is derived from the first coefficient matrix 2. Becuase calcuration and result is { 6 /(5 + 15 + 6 )}x 15 + { 6 / ( 12 + 6 + 11 )}x 21 + { 6 /( 6 + 8 + 7 ) x 30 = 16.37, the object value becomes 45 + 16 = 61 and is smaller than the threshold. Thus, the binarized signal is turned to "not to output", the error is 61. As the result, the the error value matrix become as given in Fig, 37. The same processing is performed to all input pixels in the order of main scanning and the sub scanning, and the processing for one frame is completed.

Next, description is given on the sixth invention.

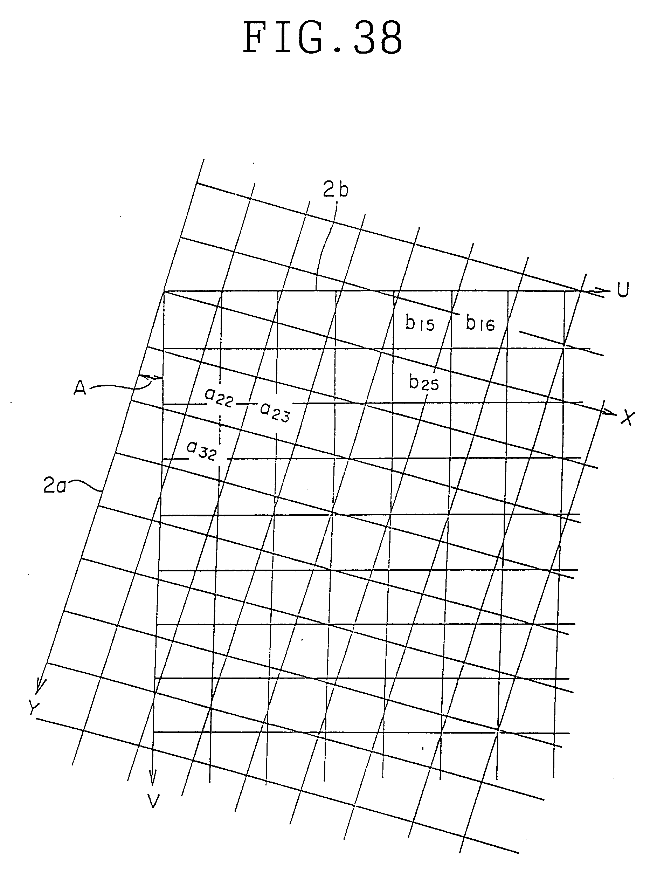

In Fig. 38, coefficient matrix 2a is obtained by rotating said first coefficient matrix 2 by the angle A, and 2b represents the coefficient matrix having the element $b_{ij}$ corresponding to the element $d_{ij}$ of the matrix 8 of the input value of multivalued input pixel of the color image. The value of $b_{ij}$ is equal to the value of $a_{rl}$, and the following relationship exists:

r = [i • cos(A) - j • sin(A)] mod m.
l = [i • sin(A) + j • cos(A)] mod n.

Here, [ ] indicates rounding process.

When the same processing as in the description of the fifth invention is performed using the first coefficient matrix 2b rotating at different angles for each color instead of the first coefficient matrix 2, the image in binary values with less moiré and color difference due to the registering miss at output can be obtained.

Next, the seventh invention is described.

It is capable to accelerate binarization by memorising the second coefficient matrix rotated in the same manner as the sixth invention previously in a memory in advance of binarization.

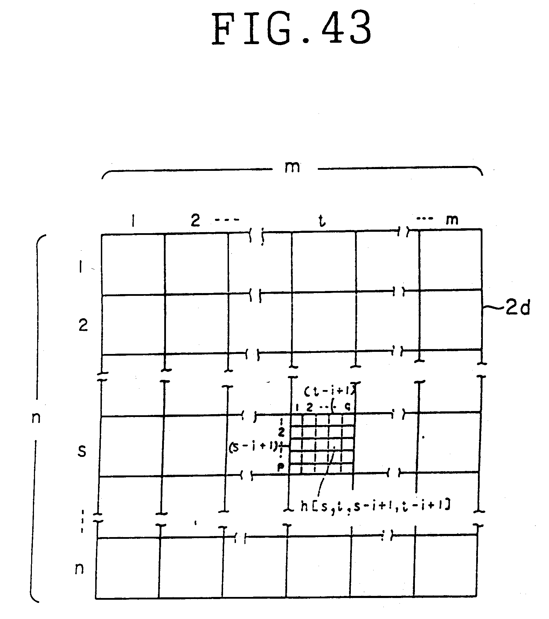

In this case, four dimention matrix 2d of n x m x p x q as conceptionaly shown in Fig. 43 stored in memory is prepared for second coefficient matrix. When it is supposed that the h is element of said matrix, the size of element $h_{s, t, s-i+1, t-j+1}$ is derived from formula (4) and is used as a coefficient multiplied to error value $c_{ij}$ for processing input value $d_{s,t}$ of multivalued input pixel of the color image.

## Foumula ( 4 )

$$\frac{a_{s, t}}{\sum\limits_{z=j-\alpha+1}^{z=j-\alpha+q} \sum\limits_{w=i}^{w=i+p-1} a_{w, z}} \quad (i \leq s \leq i+p-1 \, 、 \, j-\alpha+1 \leq t \leq j-\alpha+q)$$

$$( \text{except} \ a_{i, k} \ \text{with} \ k \leq j \ )$$

Particularly, the rotated second coefficiet matrix that has $\sqrt{\delta^2 + \tau^2} \cdot f$ elements in each side and can be repeated using $\theta$ that $\tan \theta = \delta/\tau$ belongs to a rational number and value of $\sqrt{\delta^2 + \tau^2} \cdot f$ belongs to an integer number or a near integer number. This second coefficient matrix can results the reduction of a strage region in a memory. f is least common multiple number of elements number n and m of vertical horizontal axis of the frist coefficient matrix.

In Fig. 19, 2c desinates a unit of n x n first coefficient matrix and 2d desinates the first coefficient matrix rotated in angle $\theta$ that $\tan \theta = 3/4$ as an example.

The rotated coefficient has $\sqrt{3^2 + 4^2} \, n = 5n$ elements in each side and can be repeated in vertical and horizontal direction.

[Experimental examples]

In the following, the method according to this invention will be described in connection of experimental examples, whereas the present invention is not limited to the numeral values in the experimental examples.

[Experimental example 1 of the sixth invention]

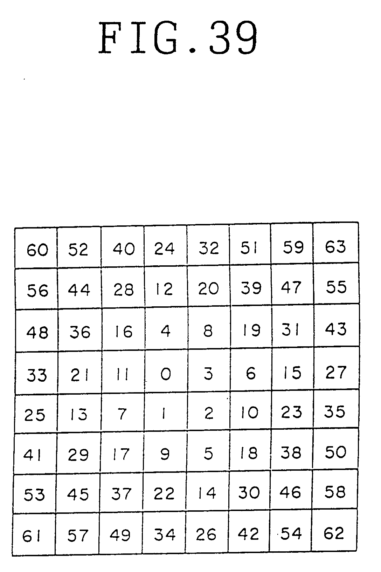

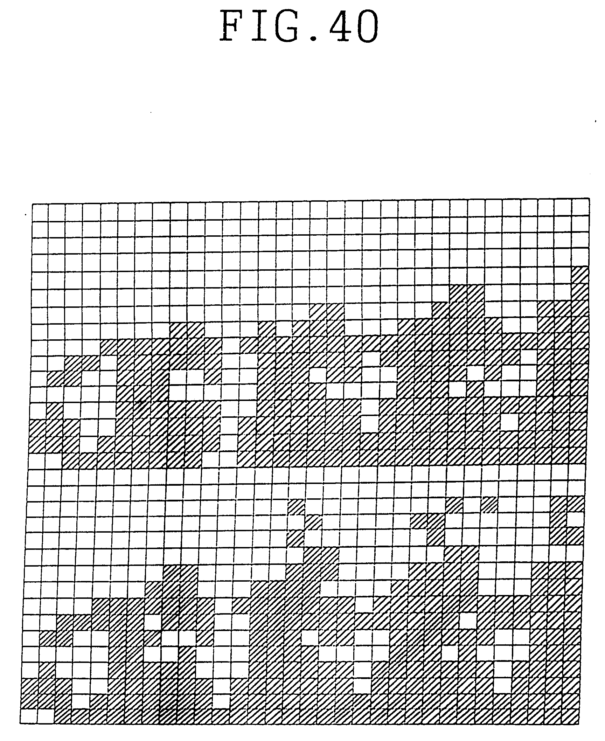

With Fig. 10 as the multivalued information of the input taking the values within the range of 0 - 255, with the threshold at 255, with Fig. 39 as first coefficient matrix, with the size of partical matrix at 4 x 4 and rotating angle of 0°, the binary image of Fig. 40 was obtained.

On the other hand, the image was reproduced through binarization according to the error diffusion method, using the same input data and the diffusion coefficient table of Fig. 13. The result is given in Fig. 14. As it is evident from the figure, the shape similar to dots can be obtained by the method of this invention.

(Experimental example 2 of the sixth invention)

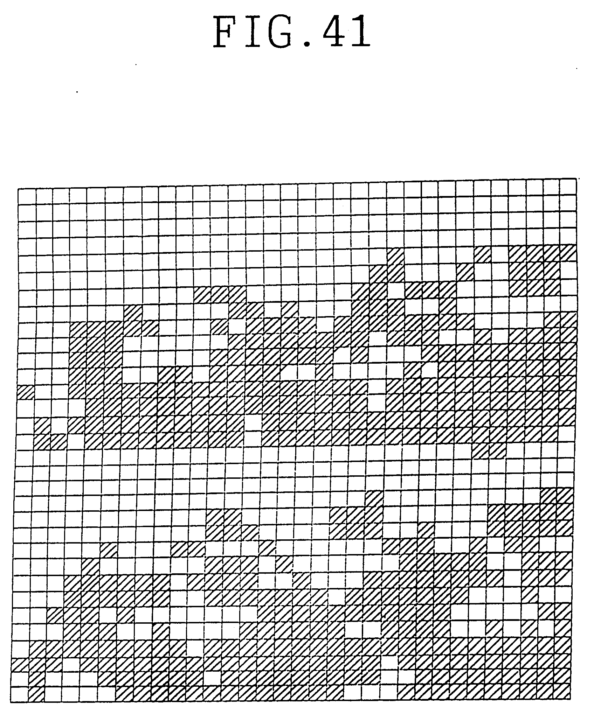

With Fig. 10 as the multivalued information of the input taking the values within the range of 0 - 255, with the threshold as 255, with Fig. 39 as first coefficient matrix, with the size of partial matrix as 4 x 4 and rotating angle of 30°, the binary image of Fig. 41 was obtained. It is also evident in this figure that the shape similar to dots can be obtained.

9

(Experimental example of the sixth invention)

A transparent original was inputtd using a scanner for printer (Dainippon Screen Co., Ltd.,; SG-818), and binarization processing was performed by personal computer PC-9801 (NEC). The binary value image was outputted on black-and-white film by a laser plotter (Scitex), and color image was reproduced by a proof press (DuPont). The results were approximately the same as that of the conventional type printing. In this case, the coefficient matrix was the same as given in Fig. 39, and the size of partial matrix was 4 x 4. The coefficient matrix was rotated by the angle of Fig. 16 for each color.

As the result, a binary value image with less moiré and color difference due to registering miss was obtained.

[ Effective advantgeous of the invention]

It is possible according to the present invention to obtain a method for color image information processing, which can provide high tone reproducibility and to give the processed image with excellent image quality without using threshold table.

When 2-dimensional coefficient matrix having a period $n \cdot m$ of this invention is turned to pyramid shape, where the values in central part is larger than those in the surrounding as given in Fig. 17, the binary value image like dots having the period similar to that of conventional type printing process using contact screen could be obtained. With the coefficient like mountain range as given in Fig. 18 the effect similar to that of the printing using single-lined screen was obtained, and both moire and color difference were extremely decreased.

## Claims

1. A method for color image information processing to reproduce multivalued color halftone image information by an output device capable to output in binary values characterized in that, when the object value that is density value of input pixel of color image or the sum of the density value and the error value is binarized through comparison with the threshold, the difference between said object value and the threshold is divided into said error values in the size proportional to the coefficient in partial matrix of the coefficient matrix having periodicity in 1-dimensional or 2-dimensional direction consisting of the elements fixedly corresponding to the position of input pixel, and said error value is added to the object value of the other input pixel distributed and fixedly corresponding to the position of said input pixel.

2. A color image information processing method claimed in claime 1 chracterized in that said coefficient matrix is rotated at different angle for each color in the first color image information processing method.

3. A color image information porcessing method claimed in claim 1 characterized in that said coefficient matrix rotated at different angle for each color is stored in the memory in the second color image information processing method.

4. A color image information porcessing method characterized in that, when the object value that is density value of input pixel of color image or the sum of the density value and the error value is binarized through comparison with the threshold, the difference between said object value and the threshold is divided into said error values in the size proportional to the coefficient in partial matrix of the coefficient matrix having periodicity in 1-dimensional or 2-dimensional direction consisting of the elements fixedly corresponding to the position of input pixel, and said error value is added to the object value of the other input pixel distributed and fixedly corresponding to the position of said input pixel, and the size of rows and/or colomns of said partial matrix is varied corresponding to the size of said error value.

5. A color image information processing method claimed in claim 4 chracterized in that supposing $c_{ij}$ is the element of the partial matrix of p rows and q columns of the object matrix of input pixel and $a_{ij}$ is the element of the partial matrix of p rows and q columns of the coefficient matrix consisting of the elements fixedly corresponding to the position of input pixel, when the difference between said $C_{ij}$ and the threshold is divided into said error value $c_{wz}$ to be added in the size proportional to the the the size of coefficient $a_{wz}$ in partial matrix and said error value $e_{wz}$ is added to $c_{wz}$, the size of rows and/or colomns of said partial matrix is varied corresponding to the size of said error value.

6. A color image information porcessing method to reproduce multivalued color image information by an output device capable to output in binary values characterized in that, when the object value that is density value of input pixel of color image or the sum of the density value and product coefficeint, which is element of second coefficient matrix calcurated from first coefficient matrix having periodicity in 1-dimensional or 2-dimensional direction consisting of the elements fixedly corresponding to the position of input pixel, and error value which is element of error value matrix fixedly corresponding to the positon of the input pixel is binarized through comparison with the threshold, the difference between said object value and the threshold is stored as an element of error value matirx corresponding to the position of input pexel.

7. A color image information processing method claimed in claim 6 chracterized in that ,
the element of the second coefficient matrix to be multiplied with the error value $c_{ij}$ to obtain the products, wherein the products is added said $d_{st}$ to obtan the object value, is calcurated from the formura given as follows.

$$\frac{a_{s,t}}{\sum\limits_{z=j-\alpha+1}^{z=j-\alpha+q} \sum\limits_{w=i}^{w=i+p-1} a_{w,z}} \quad (i \leqq s \leqq i+p-1 \, , \, j-\alpha+1 \leqq t \leqq j-\alpha+q)$$

$$(\text{except } a_{i,k} \quad \text{with } k \leqq j)$$

8. A color image information porcessing methodclaimed in claim 7 characterized in that, said first coefficient matrix is rotated at different angle for each color.

9. A color image information porcessing method claimed in claim 7 characterized in that, said coefficient matrix rotated at different angle for each color is stored in the memory.

# FIG. I

EP 0 476 220 A2

$m$

$n$

| $a_{11}$ | $a_{12}$ | $a_{13}$ | | | | $a_{1m}$ | $a_{11}$ | $a_{12}$ | $a_{13}$ |
| $a_{21}$ | $a_{22}$ | $a_{23}$ | | | | $a_{2m}$ | $a_{21}$ | $a_{22}$ | $a_{23}$ |
| $a_{31}$ | $a_{32}$ | $a_{33}$ | | | | $a_{3m}$ | $a_{31}$ | $a_{32}$ | $a_{33}$ |

$a_{n1}$  $a_{n2}$  $a_{n3}$   $a_{nm}$  $a_{n1}$

$a_{11}$  $a_{12}$  $a_{13}$   $a_{1m}$  $a_{11}$

$a_{21}$  $a_{22}$  $a_{23}$

2

1

U

V

# F I G. 2

EP 0 476 220 A2

# F I G. 3

EP 0 476 220 A2

# FIG. 4

$c_{11}$ $c_{12}$ 5

10

U

| 40 | 99 | 70 | 88 | ... |
|----|----|----|----|-----|
| 50 | 23 | 55 | 43 | ... |
| 12 | 73 | 42 | 69 | ... |

$c_{21}$

V

# FIG. 5

$a_{11}$ $a_{12}$ $a_{13}$ 2

| 3 | 3 | 3 | 3 | 3 |
|---|---|---|---|---|
| 3 | 4 | 4 | 4 | 3 |
| 3 | 4 | 5 | 4 | 3 |
| 3 | 4 | 4 | 4 | 3 |
| 3 | 3 | 3 | 3 | 3 |

$a_{21}$
$a_{22}$

# FIG. 6

3

# FIG. 7

U

| 40 | 111 | 70 | 88 | ... |
|----|-----|----|----|-----|
| 62 | 39  | 55 | 43 | ... |
| 12 | 73  | 42 | 69 | ... |

V

# FIG. 8

U

| 40 | 111 | 73 | 88 | ... |
|----|-----|----|----|-----|
| 62 | 43  | 59 | 43 | ... |
| 12 | 73  | 42 | 69 | ... |

V

15

# F I G. 9

# F I G. 10

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| 7 | 7 | 7 | 7 | 15 | 15 | 15 | 15 | 23 | 23 | 23 | 23 | 31 | 31 | 31 | 31 | 39 | 39 | 39 | 39 | 47 | 47 | 47 | 47 | 55 | 55 | 55 | 55 | 63 | 63 | 63 | 63 |
| 7 | 7 | 7 | 7 | 15 | 15 | 15 | 15 | 23 | 23 | 23 | 23 | 31 | 31 | 31 | 31 | 39 | 39 | 39 | 39 | 47 | 47 | 47 | 47 | 55 | 55 | 55 | 55 | 63 | 63 | 63 | 63 |
| 7 | 7 | 7 | 7 | 15 | 15 | 15 | 15 | 23 | 23 | 23 | 23 | 31 | 31 | 31 | 31 | 39 | 39 | 39 | 39 | 47 | 47 | 47 | 47 | 55 | 55 | 55 | 55 | 63 | 63 | 63 | 63 |
| 7 | 7 | 7 | 7 | 15 | 15 | 15 | 15 | 23 | 23 | 23 | 23 | 31 | 31 | 31 | 31 | 39 | 39 | 39 | 39 | 47 | 47 | 47 | 47 | 55 | 55 | 55 | 55 | 63 | 63 | 63 | 63 |
| 71 | 71 | 71 | 71 | 79 | 79 | 79 | 79 | 87 | 87 | 87 | 87 | 95 | 95 | 95 | 95 | 103 | 103 | 103 | 103 | 111 | 111 | 111 | 111 | 119 | 119 | 119 | 119 | 127 | 127 | 127 | 127 |
| 71 | 71 | 71 | 71 | 79 | 79 | 79 | 79 | 87 | 87 | 87 | 87 | 95 | 95 | 95 | 95 | 103 | 103 | 103 | 103 | 111 | 111 | 111 | 111 | 119 | 119 | 119 | 119 | 127 | 127 | 127 | 127 |
| 71 | 71 | 71 | 71 | 79 | 79 | 79 | 79 | 87 | 87 | 87 | 87 | 95 | 95 | 95 | 95 | 103 | 103 | 103 | 103 | 111 | 111 | 111 | 111 | 119 | 119 | 119 | 119 | 127 | 127 | 127 | 127 |
| 71 | 71 | 71 | 71 | 79 | 79 | 79 | 79 | 87 | 87 | 87 | 87 | 95 | 95 | 95 | 95 | 103 | 103 | 103 | 103 | 111 | 111 | 111 | 111 | 119 | 119 | 119 | 119 | 127 | 127 | 127 | 127 |
| 135 | 135 | 135 | 135 | 143 | -- | -- | 143 | 151 | -- | -- | 151 | 159 | -- | -- | 159 | 167 | -- | -- | 167 | 175 | -- | -- | 175 | 183 | -- | -- | 183 | 191 | -- | -- | 191 |
| 135 | 135 | 135 | 135 | : | | | : | : | | | : | : | | | : | : | | | : | : | | | : | : | | | : | : | | | : |
| 135 | 135 | 135 | 135 | : | | | : | : | | | : | : | | | : | : | | | : | : | | | : | : | | | : | : | | | : |
| 135 | 135 | 135 | 135 | 143 | -- | -- | 143 | 151 | -- | -- | 151 | 159 | -- | -- | 159 | 167 | -- | -- | 167 | 175 | -- | -- | 175 | 183 | -- | -- | 183 | 191 | -- | -- | 191 |
| 199 | -- | -- | 199 | 207 | -- | -- | 207 | 215 | -- | -- | 215 | 223 | -- | -- | 223 | 231 | -- | -- | 231 | 239 | -- | -- | 239 | 247 | -- | -- | 247 | 255 | -- | -- | 255 |
| : | | | : | : | | | : | : | | | : | : | | | : | : | | | : | : | | | : | : | | | : | : | | | : |
| : | | | : | : | | | : | : | | | : | : | | | : | : | | | : | : | | | : | : | | | : | : | | | : |
| 199 | -- | -- | 199 | 207 | -- | -- | 207 | 215 | -- | -- | 215 | 223 | -- | -- | 223 | 231 | -- | -- | 231 | 239 | -- | -- | 239 | 247 | -- | -- | 247 | 255 | -- | -- | 255 |
| 7 | -- | -- | 7 | 15 | -- | -- | 15 | 23 | -- | -- | 23 | 31 | -- | -- | 31 | 39 | -- | -- | 39 | 47 | -- | -- | 47 | 55 | -- | -- | 55 | 63 | -- | -- | 63 |
| : | | | : | : | | | : | : | | | : | : | | | : | : | | | : | : | | | : | : | | | : | : | | | : |
| : | | | : | : | | | : | : | | | : | : | | | : | : | | | : | : | | | : | : | | | : | : | | | : |
| 7 | -- | -- | 7 | 15 | -- | -- | 15 | 23 | -- | -- | 23 | 31 | -- | -- | 31 | 39 | -- | -- | 39 | 47 | -- | -- | 47 | 55 | -- | -- | 55 | 63 | -- | -- | 63 |
| 71 | -- | -- | 71 | 79 | -- | -- | 79 | 87 | -- | -- | 87 | 95 | -- | -- | 95 | 103 | -- | -- | 103 | 111 | -- | -- | 111 | 119 | -- | -- | 119 | 127 | -- | -- | 127 |
| : | | | : | : | | | : | : | | | : | : | | | : | : | | | : | : | | | : | : | | | : | : | | | : |
| : | | | : | : | | | : | : | | | : | : | | | : | : | | | : | : | | | : | : | | | : | : | | | : |
| 71 | -- | -- | 71 | 79 | -- | -- | 79 | 87 | -- | -- | 87 | 95 | -- | -- | 95 | 103 | -- | -- | 103 | 111 | -- | -- | 111 | 119 | -- | -- | 119 | 127 | -- | -- | 127 |
| 135 | -- | -- | 135 | 143 | -- | -- | 143 | 151 | -- | -- | 151 | 159 | -- | -- | 159 | 167 | -- | -- | 167 | 175 | -- | -- | 175 | 183 | -- | -- | 183 | 191 | -- | -- | 191 |
| : | | | : | : | | | : | : | | | : | : | | | : | : | | | : | : | | | : | : | | | : | : | | | : |
| : | | | : | : | | | : | : | | | : | : | | | : | : | | | : | : | | | : | : | | | : | : | | | : |
| 135 | -- | -- | 135 | 143 | -- | -- | 143 | 151 | -- | -- | 151 | 159 | -- | -- | 159 | 167 | -- | -- | 167 | 175 | -- | -- | 175 | 183 | -- | -- | 183 | 191 | -- | -- | 191 |
| 199 | -- | -- | 199 | 207 | -- | -- | 207 | 215 | -- | -- | 215 | 223 | -- | -- | 223 | 231 | -- | -- | 231 | 239 | -- | -- | 239 | 247 | -- | -- | 247 | 255 | -- | -- | 255 |
| : | | | : | : | | | : | : | | | : | : | | | : | : | | | : | : | | | : | : | | | : | : | | | : |
| : | | | : | : | | | : | : | | | : | : | | | : | : | | | : | : | | | : | : | | | : | : | | | : |
| 199 | -- | -- | 199 | 207 | -- | -- | 207 | 215 | -- | -- | 215 | 223 | -- | -- | 223 | 231 | -- | -- | 231 | 239 | -- | -- | 239 | 247 | -- | -- | 247 | 255 | -- | -- | 255 |

# F I G. I I

| 60 | 52 | 40 | 24 | 32 | 51 | 59 | 63 |
|----|----|----|----|----|----|----|----|
| 56 | 44 | 28 | 12 | 20 | 39 | 47 | 55 |
| 48 | 36 | 16 | 4  | 8  | 19 | 31 | 43 |
| 33 | 21 | 11 | 0  | 3  | 6  | 15 | 27 |
| 25 | 13 | 7  | 1  | 2  | 10 | 23 | 35 |
| 41 | 29 | 17 | 9  | 5  | 18 | 38 | 50 |
| 53 | 45 | 37 | 22 | 14 | 30 | 46 | 58 |
| 61 | 57 | 49 | 34 | 26 | 42 | 54 | 62 |

# F I G. 12

# F I G. 13

# F I G. 14

# F I G. 15

# F I G. 16

| CYAN | 17.5° |
|---------|-------|
| MAGENTA | 77.5° |
| YELLOW | 2.5° |
| BLACK | 47.5° |

# F I G. 17

# F I G. 18

# FIG.19

# FIG.20

|  |  |  |  |
|---|---|---|---|
| 42 | 99 | 70 | 88 |
| 50 | 23 | 55 | 43 |
| 12 | 73 | 42 | 69 |

C11  C12  5

10

U

C21

V

# FIG.21

a11  a12  a13  2

|  |  |  |  |  |
|---|---|---|---|---|
| 3 | 3 | 3 | 3 | 3 |
| 3 | 4 | 4 | 4 | 3 |
| 3 | 4 | 5 | 4 | 3 |
| 3 | 4 | 4 | 4 | 3 |
| 3 | 3 | 3 | 3 | 3 |

a21

a22

# FIG.22

| RANGE OF ERROR VALUE | PARTICAL MATRIX |
|---|---|
| 0 ~ 49 | 2 ROWS × 2 COLUMNS |
| 50 OR MORE | 3 ROWS × 3COLUMNS |

# FIG.23

|  |  |  |  | → U |
|---|---|---|---|---|
| 40 | 111 | 70 | 88 |  |
| 62 | 39 | 55 | 43 |  |
| 12 | 73 | 42 | 69 |  |

V

# FIG.24

|  |  |  |  | → U |
|---|---|---|---|---|
| 40 | 111 | 73 | 88 |  |
| 62 | 43 | 59 | 43 |  |
| 12 | 73 | 42 | 69 |  |

V

# FIG.25

# FIG.26

| RANGE OF ERROR VALUE | PARTICAL MATRIX |
|---|---|
| $0 \sim 63$ | 2 ROWS 2 COLUMNS |
| $64 \sim 127$ | 3 ROWS 3 COLUMNS |
| 128 OR MORE | 4 ROWS 4 COLUMNS |

# FIG.27

# FIG.28

| | | | | |
|---|---|---|---|---|
| I | I | I | I | I |
| I | 2 | 2 | 2 | I |
| I | 2 | 3 | 2 | I |
| I | 2 | 2 | 2 | I |
| I | I | I | I | I |

# FIG.29

| GRADATION VALUE OF INPUT DATA ( % ) | OUTPUT DOTS · % ( % ) | |
|---|---|---|
| | SIZE VARIABLE PARTIAL MATRIX | SIZE INVARIABLE PARTIAL MATRIX |
| 10 | 7.74 | 7.24 |
| 20 | 17.61 | 17.27 |
| 30 | 27.81 | 27.25 |
| 40 | 37.61 | 37.24 |
| 50 | 47.87 | 47.36 |
| 60 | 58.20 | 57.39 |
| 70 | 68.53 | 67.40 |
| 80 | 78.89 | 77.40 |
| 90 | 89.22 | 87.38 |
| 100 | 99.56 | 97.51 |

# FIG.30

# FIG.31

ERROR VALUE MATRIX

SECOND COEFFICIENT MATRIX

SUM OF PRODUCT OPERATION

OPERATION FOR CALCURATION OF COEFFICIENT

OPERATION FOR ROTATION

COMPARATOR

THRESHOLD VALUE T

OBJECT VALUE -T
OR
OBJECT VALUE

FIRST COEFFICIENT MATRIX

MEMORY

OUT PUT APPARATUS

FIRST COEFFICIENT MATRIX          ERROR VALUE MATRIX

FIG.32

EP 0 476 220 A2

34

# FIG.33

# FIG.34

|    |    |    |   |
|----|----|----|---|
| 1  | 2  | 3  | 4 |
| 12 | 13 | 14 | 5 |
| 11 | 16 | 15 | 6 |
| 10 | 9  | 8  | 7 |

2

# FIG.35

3

# FIG.36

| --- | --- | --- | --- | 51 | --- |
| --- | 30 | 70 | 85 | 43 | --- |
| --- | 12 | 10 | | | |
| | | | | | |
| | | | | | |

5

# FIG.37

| --- | --- | --- | --- | 51 | --- | --- | --- |
| --- | 30 | 70 | 85 | 43 | | | |
| --- | 12 | 10 | 61 | | | | |
| | | | | | | | |
| | | | | | | | |
| | | | | | | | |

5

# FIG.38

# FIG.39

| 60 | 52 | 40 | 24 | 32 | 51 | 59 | 63 |
|----|----|----|----|----|----|----|----|
| 56 | 44 | 28 | 12 | 20 | 39 | 47 | 55 |
| 48 | 36 | 16 | 4 | 8 | 19 | 31 | 43 |
| 33 | 21 | 11 | 0 | 3 | 6 | 15 | 27 |
| 25 | 13 | 7 | 1 | 2 | 10 | 23 | 35 |
| 41 | 29 | 17 | 9 | 5 | 18 | 38 | 50 |
| 53 | 45 | 37 | 22 | 14 | 30 | 46 | 58 |
| 61 | 57 | 49 | 34 | 26 | 42 | 54 | 62 |

# FIG.40

# FIG.41

# FIG.42

9

$$\frac{6}{5+15+6}$$

$$\frac{6}{12+6+11}$$

$$\frac{6}{5+8+7}$$

# FIG.43